# EUROPEAN PATENT APPLICATION

(11) **EP 2 194 299 A1**
(43) Date of publication of application: **09.06.2010**
(21) Application number: 08777979.9
(22) Date of filing: 09.07.2008
(51) Int. Cl.: F16J 15/32

(54) **SEALING DEVICE**

(30) Priority: 02.10.2007 JP 2007258651; 04.03.2008 JP 2008053315
(71) Applicant: NOK Corporation, Minato-ku Tokyo 105-8585 (JP)
(72) Inventor: MIURA, Daisuke, Fukushima-shi Fukushima 960-1102 (JP); NAKAGAWA, Takehiro, Fukushima-shi Fukushima 960-1102 (JP)
(74) Representative: TBK-Patent
(86) International application number: PCT/JP2008/062370
(87) International publication number: WO 2009/044575

(57) **Abstract**

A sealing device in which durability of a seal lip is enhanced by enhancing the function of supply of lubricant to a seal lip slide portion. The sealing device is attached to the inner periphery of a shaft hole in a housing and comes into intimate slidable contact with the peripheral surface of a shaft inserted in the shaft hole. The sealing device has a sealing device body and an oil supply member. The sealing device body integrally has a tubular fixation portion fixed to the inner periphery of the shaft hole in the housing and also integrally has a seal lip coming into intimate slidable contact with the peripheral surface of the shaft. The oil supply member integrally has a tubular fitting portion fitted to the inner peripheral side of the fixation portion and also integrally has a flange-like oil supply portion provided so as to extend radially inward from the fitting portion. The oil supply portion is placed closer to the sealing fluid side than the tip of the seal lip. A radially inwardly extending protrusion is provided at the inner peripheral edge of the oil supply portion. An oil transmission groove is provided in the protrusion so as to extend toward its tip.

## Description

### BACKGROUND OF THE INVENTION

### Field of the Invention

The present invention relates to a sealing device, and more particularly to a sealing device structured such as to enhance a supplying function of lubricating oil to a seal lip slide portion. The sealing device in accordance with the present invention is used, for example, in an automobile associated field, or is used in the other general purpose machine or the like.

### Description of the Conventional Art

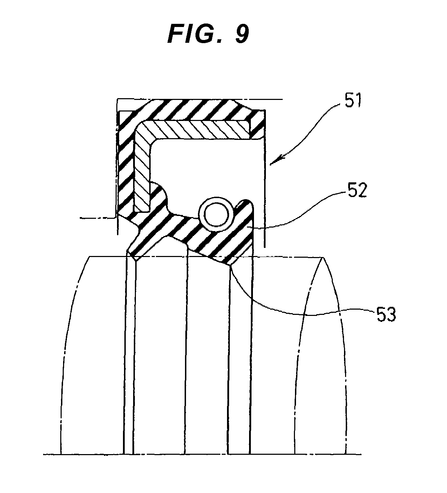

A sealing device 51 shown in Fig. 9 has been conventionally known, and in this kind of sealing device 51, it is necessary to supply lubricating oil to a seal lip slide portion 53 to reduce thermal deterioration and a slide abrasion for improving durability of a seal lip 52 constructed by a predetermined rubber-like elastic body. However, for example, in the case that the oil to be sealed exists in a mist state, the seal lip slide portion 53 tends to be in a poor lubrication state, and there is accordingly a risk that a seal service life is lowered due to thermal deterioration, a slide abrasion or the like of the slide portion 53 (refer to the following patent document 1).

Patent Document 1: Japanese Unexamined Patent Publication No. 2003-056718

### SUMMARY OF THE INVENTION

### Problem to be Solved by the Invention

The present invention is made by taking the points mentioned above into consideration, and an object of the present invention is to provide a sealing device which can enhance a supplying function of lubricating oil to a seal lip slide portion, so as to make it possible to improve durability of the seal lip.

### Means for Solving the Problem

In order to achieve the object mentioned above, in accordance with claim 1 of the present invention, there is provided a sealing device installed to an inner periphery of a shaft hole of a housing so as to slidably come into close contact with a peripheral surface of a shaft inserted to the shaft hole, the sealing device comprising:
a sealing device body integrally having a tubular fixation portion fixed to the inner periphery of the shaft hole of the housing and a seal lip slidably coming into close contact with the peripheral surface of the shaft; and
an oil supply member integrally having a tubular fitting portion fitted to an inner peripheral side of the fixation portion and a flange-like oil supply portion provided from the fitting portion toward an inner side in a radial direction,
wherein the oil supply portion is arranged at a sealed fluid side from an end of the seal lip, and oil transmission grooves are provided at least at a position above the shaft in a surface of the oil supply portion, the oil transmission grooves being provided for guiding oil attached to the oil supply portion along the grooves so as to drop on the shaft.

Further, in accordance with claim 2 of the present invention, there is provided the sealing device as recited in claim 1, wherein protrusions are provided on an inner peripheral edge portion of the oil supply portion toward an inner side in the radial direction, and the oil transmission grooves are provided toward end portions in a protruding direction of the protrusions.

Further, in accordance with claim 3 of the present invention, there is provided the sealing device as recited in claim 1 or 2, wherein the oil transmission grooves are formed as spiral curve shaped grooves which incline toward the same direction as a rotating direction of the shaft from their outer peripheral end portions to their inner peripheral end portions.

Further, in accordance with claim 4 of the present invention, there is provided a sealing device installed to an inner periphery of a shaft hole of a housing so as to slidably come into close contact with a peripheral surface of a shaft inserted to the shaft hole, the sealing device comprising:
a sealing device body integrally having a tubular fixation portion fixed to the inner periphery of the shaft hole of the housing and a seal lip slidably coming into close contact with the peripheral surface of the shaft; and
an oil supply member integrally having a tubular fitting portion fitted to an inner peripheral side of the fixation portion and a flange-like oil supply portion provided from the fitting portion toward an inner side in a radial direction,
wherein the oil supply portion is arranged at a sealed fluid side from an end of the seal lip, and a wavy shape is provided at least at a position above the shaft in a surface of the oil supply portion, the wavy shape being provided for guiding oil attached to the oil supply portion along grooves so as to drop on the shaft.

Further, in accordance with claim 5 of the present invention, there is provided the sealing device as recited in any one of claim 1 to 4, wherein the oil supply member integrally has a tubular fitting portion, a reverse portion having a circular arc shaped cross section and integrally formed from one end portion in an axial direction of the fitting portion toward an inner side in the radial direction, an inner peripheral tube portion integrally formed with the reverse portion, and a flange-like oil supply portion integrally formed from the other end portion in the axial direction of the inner peripheral tube portion toward an inner side in the radial direction.

In the sealing device in accordance with the present invention having the structures mentioned above, since the oil supply member is combined with the sealing device body, and the oil supply member makes oil to be attached thereto so as to drop on the shaft, it is possible to lubricate the seal lip slide portion by the dropped oil.

Further, the sealing device body integrally has the tubular fixation portion fixed to the inner periphery of the shaft hole of the housing, and the seal lip slidably coming into close contact with the peripheral surface of the shaft, and the oil supply member integrally has the tubular fitting portion fitted to the inner peripheral side of the fixation portion, and the flange-like oil supply portion provided from the fitting portion toward the inner side in the radial direction. Accordingly, since both of them (the sealing device body and the oil supply member) are respectively manufactured as the independent bodies and assembled with each other, it is possible to assemble the sealing device body with the oil supply member in a post-assembly manner as occasion demands (it is possible to utilize the oil supply member as an option part).

Further, the oil supply member has the flange-like oil supply portion, and the flange-like oil supply portion makes mist state oil to be attached onto the end surface in the axial direction thereof, and drops it as oil drops on the shaft. Accordingly, since the oil attaching portion is formed in the flange shape so as to have a comparatively wide end surface in the axial direction, it is possible to make a lot of oil to be attached so as to drop.

Further, if the flange-like oil supply portion is arranged above the seal lip, the oil is dropped on the seal lip and is not dropped on the shaft. As a result, there is a risk that the oil is not supplied to the seal lip slide portion. However, in the present invention, since the oil supply portion is arranged at the sealed fluid side (at the sealed fluid side in the axial direction) from the end of the seal lip, it is possible to securely drop the oil on the shaft.

Further, in the case that the shaft is rotated at a high speed, an atmospheric air flow is generated around the oil supply member in accordance with the rotation of the shaft. Accordingly, there is a risk that the oil attached to the oil supply portion flows away in the circumferential direction on the surface of the oil supply portion along the atmospheric air flow and is not dropped on the shaft. However, in the present invention, since the oil transmission grooves or the wavy shape for guiding the oil attached to the oil supply portion along the grooves so as to drop on the shaft are provided at least at the position above the shaft in the surface of the oil supply portion, the oil flows along the grooves and is readily be dropped on the shaft. The oil flows along the grooves so as to be collected, and is dropped as the oil drops on the shaft from the inner peripheral edge portion of the oil supply portion. In the case of the wavy shape, the grooves are formed by trough portions in peaks and troughs of the wavy shape.

Further, in the case that the oil transmission grooves are provided on the surface of the oil supply portion as mentioned above, the oil flows along the grooves so as to be collected, and is dropped as the oil drops on the shaft from the inner peripheral edge portion of the oil supply portion. However, since the oil supply portion is formed in the flange shape, and its inner peripheral edge portion is formed in the annular shape, there is a risk that the small oil drops flow away in the circumferential direction via the inner peripheral edge portion of the oil supply portion, and is not dropped on the shaft. Accordingly, in the case mentioned above, there can be considered that the protrusions are provided on the inner peripheral edge portion of the oil supply portion toward the inner side in the radial direction, and the oil transmission grooves are provided toward the end portions in the protruding direction of the protrusions. In accordance with this structure, since the oil drops are reserved at the end portions of the protrusions protruding to the inner side in the radial direction from the inner peripheral edge portion in place of the inner peripheral edge portion of the oil supply portion, the oil drops are securely dropped down without flowing on the inner peripheral edge portion of the oil supply portion.

Further, since the oil transmission grooves are structured such as to guide the oil, which tends to flow in the circumferential direction along the atmospheric air flow, to the inner peripheral edge portion of the oil supply portion, the grooves extending in the circumferential direction is of no use, and the grooves extending in the radial direction are necessary. In this case, if the oil transmission grooves are formed as the spiral curve shaped grooves which incline toward the same direction as the rotating direction of the shaft from the outer peripheral end portion to the inner peripheral end portion, the oil is guided by the grooves, while flowing with the atmospheric air flow, so as to head for the inner peripheral edge portion of the oil supply portion little by little. Accordingly, it is possible to efficiently collect the oil.

Further, in the case that the wavy shape is provided in the surface of the oil supply portion as mentioned above, the surface of the oil supply portion is made three dimensional. Accordingly, the oil attached area is further enlarged.

Further, in the case that the oil supply member integrally has the tubular fitting portion, the reverse portion having the circular arc shaped cross section and integrally formed from one end portion in the axial direction of the fitting portion toward the inner side in the radial direction, the inner peripheral tube portion integrally formed with the reverse portion, and the flange-like oil supply portion integrally formed from the other end portion in the axial direction of the inner peripheral tube portion toward the inner side in the radial direction, there is a possibility that the oil is attached to the inner peripheral surface of the fitting portion, the inner surface of the reverse portion and the outer peripheral surface of the inner peripheral tube portion. Accordingly, the oil attached area is further enlarged.

Further, the oil supply member integrally having the tubular fitting portion, the reverse portion having the circular arc shaped cross section and integrally formed from one end portion in the axial direction of the fitting portion toward the inner side in the radial direction, the inner peripheral tube portion integrally formed with the reverse portion, and the flange-like oil supply portion integrally formed from the other end portion in the axial direction of the inner peripheral tube portion toward the inner side in the radial direction is fitted to the inner peripheral side of the fixation portion from the reverse portion having the circular arc shaped cross section at a time of fitting this to the sealing device body. Accordingly, the reverse portion has a chamfer portion which can facilitate the fitting on its outer surface because of its circular arc shaped cross section, and the chamfer portion mentioned above is provided by press work without cutting. Therefore, it is possible to form the oil supply member having the chamfer portion which can facilitate the fitting to the sealing device body only by press work which does not accompany the cutting work.

### Effect of the Invention

The present invention has the following effects.

In the sealing device in accordance with the present invention, since the oil supply member is combined with the sealing device body, and the oil supply member makes the oil to be attached thereto so as to drop on the shaft as mentioned above, it is possible to lubricate the seal lip slide portion by the dropped oil. Further, since the sealing device body and the oil supply member are respectively manufactured as the independent bodies and are assembled with each other, it is possible to assemble the sealing device body with the oil supply member in a post-assembly manner as occasion demands. Further, since the oil supply portion is formed in the flange shape so as to have the comparatively wide axial end surface, it is possible to make a lot of oil to be attached thereto so as to drop down. Further, since the oil supply portion is arranged at the sealed fluid side from the end of the seal lip, it is possible to securely drop the oil on the shaft. Further, since the oil transmission grooves or the wavy shape for guiding the oil attached to the oil supply portion along the grooves so as to drop on the shaft is provided at least at the position above the shaft in the surface of the oil supply portion, the oil flows along the grooves, and accordingly is readily dropped on the shaft. Therefore, in cooperation of those, it is possible to enhance the supplying function of the lubricating oil to the seal lip slide portion in accordance with the intended purpose of the present invention, whereby it is possible to improve the durability of the seal lip.

Further, in the case that the protrusions are provided in the inner peripheral edge portion of the oil supply portion toward the inner side in the radial direction, and the oil transmission grooves are provided toward the end portions in the protruding direction of the protrusions, the oil drops are reserved on the end portions of the protrusions protruding to the inner side in the radial direction from the inner peripheral edge portion of the oil supply portion in place of the inner peripheral edge portion itself. Accordingly, the oil drops are securely dropped down without flowing on the inner peripheral edge portion of the oil supply portion. Therefore, it is possible to further enhance the lubricating oil supply function.

Further, if the oil transmission grooves are formed as the spiral curve shaped grooves which incline toward the same direction as the rotating direction of the shaft from the outer peripheral end portion to the inner peripheral end portion, the oil is guided by the grooves, while flowing together with the atmospheric air flow, so as to head for the inner peripheral edge portion of the oil supply portion little by little. Accordingly, it is possible to efficiently collect the oil. Therefore, it is possible to further enhance the lubricating oil supplying function.

Further, in the case that the wavy shape is provided in the surface of the oil supply portion, the surface of the oil supply portion is made three dimensional. Accordingly, the oil attached area is further enlarged. In the case that the oil supply member integrally has the tubular fitting portion, the reverse portion having the circular arc shaped cross section and integrally formed from one end portion in the axial direction of the fitting portion toward the inner side in the radial direction, the inner peripheral tube portion integrally formed with the reverse portion, and the flange-like oil supply portion integrally formed from the other end portion in the axial direction of the inner peripheral tube portion toward the inner side in the radial direction, the oil attached area is further enlarged. Therefore, it is possible to supply a lot of oil to the lip slide portion.

Further, in the case that the oil supply member integrally has the fitting portion, the reverse portion having the circular arc shaped cross section, the inner peripheral tube portion and the flange-like oil supply portion, it is possible to form the oil supply member having the chamfer portion for facilitating the fitting to the sealing device body only in accordance with the press work which does not accompany the cutting work, and thereby it is possible to easily manufacture it.

### BRIEF EXPLANATION OF DRAWINGS

Fig. 1 is a sectional view of a substantial part of a sealing device in accordance with a first embodiment of the present invention;
Fig. 2 is a side view of an oil supply member in the sealing device;
Fig. 3 is a side view of an oil supply member in a sealing device in accordance with a second embodiment of the present invention;
Fig. 4 is a sectional view of a substantial part of a sealing device in accordance with a third embodiment of the present invention;
Fig. 5 is a side view of an oil supply member in the sealing device;
Fig. 6 is a side view of an oil supply member in a sealing device in accordance with a fourth embodiment of the present invention;
Fig. 7 is a sectional view of a substantial part of a sealing device in accordance with a fifth embodiment of the present invention;
Fig. 8 is a partly perspective view of an oil supply member in the sealing device; and
Fig. 9 is a sectional view of a substantial part of a sealing device in accordance with a prior art.

### Description of Reference Numerals

- 1: sealing device
- 11: sealing device body
- 12: fixation portion
- 13: lip holding portion
- 14: seal lip
- 14a: end
- 15, 34: annular member
- 16, 35: tubular portion
- 17, 36: inward flange portion
- 18: rubber-like elastic body
- 19: outer peripheral seal portion
- 20: end face coating portion
- 21: dust lip
- 22: garter spring
- 31: oil supply member
- 32: fitting portion
- 33: oil supply portion
- 33a: surface (axial end face)
- 33b: inner peripheral edge portion
- 37: oil transmission groove
- 37a: outer peripheral end portion
- 37b: inner peripheral end portion
- 38: protrusion
- 39: reverse portion
- 40: inner peripheral tube portion
- 41: wavy shape
- 42: chamfer portion
- 61: housing
- 62: shaft hole
- 63: shaft
- U: oil drop

### DETAILED DESCRIPTION OF PREFERRED EMBODIMENT

The present invention includes the following embodiments.
(1) Oil can be easily guided onto a shaft by providing grooves (oil transmission grooves) so as to form a spiral curve shape with respect to a shaft, on a protection ring (an oil supply member) or protrusion surfaces in the case that protrusion portions are provided on the protection ring.
(2) There is no particular designation of an angle of the grooves in the spiral curve shape, but they may have any angle as long as it is not in a direction of a concentric circle with respect to the shaft.
(3) Reason for forming the oil transmission grooves as the spiral curve shaped groove:
   In the case that the shaft is rotated at a high speed, the oil drops are pulled in the rotating direction by the atmospheric air flow along the wall surface of the oil supply portion or form a protrusion portion toanotherprotrusionportion. Accordingly, dropping of the oil drops is not caused as being expected. Therefore, the grooves are provided in a direction in which the oil is pulled as a means for promoting the oil to drop down.
(4) Relation between the direction of the spiral curve shaped grooves and the rotating direction of the shaft:
   The direction of the grooves are set in the same direction as the shaft rotating direction toward the center. This direction is such a direction as to scrape the oil at a time when the oil is pulled in the peripheral direction. If it is in an opposite direction, the oil moves in a direction in which the oil expands in an outer peripheral direction in accordance with the grooves. Accordingly, this structure is not preferable.
(5) Comparison with the case that a plurality of protrusion portions are provided in the inner peripheral portion of the protection ring flange and the grooves are not provided:
   In this case, the atmospheric air flow is generated around the protection ring on the basis of the rotation of the shaft, the oil is transmitted from a protrusion of the protection ring to another protrusion, and there exists the oil which does not drop to the shaft but remains on the protection ring. Particularly, at a time of the high speed rotation in which the atmospheric air flow speed is high, the oil is hard to drop on the shaft. In order to easily drop the oil which does not drop to the shaft but remains on the protection ring, the grooves are provided in the protrusion surfaces of the protection ring in such a manner as to have the spiral curve shape with respect to the shaft, thereby easily guiding the oil which does not drop to the shaft from the conventional protection ring, onto the shaft. As a result, it is possible to further enhance the effect of the protection ring, and it is possible to improve the seal lip portion lubricating capability.
(6) As mentioned above, the spiral curve shaped grooves are preferable, however, the grooves in the radial direction are also included in the scope of the present invention. The oil drops can be reserved in comparison with the case that no groove is provided.
   Matters in association with claims 4 and 5:
(7) The protection ring is provided at the oil side of the seal, and the oil attached to the protection ring is dropped on the vicinity of the lip, thereby increasing an oil supply amount to the lip and achieving the long service life of the seal.
(8) In order to drop more oil attached to the protection ring on the shaft, the protection ring surface is formed as the wavy shape toward the center of the shaft.
(9) The protection ring shape is formed in a shape which can be pressure inserted, only by a press work without carrying out any chamfering work requiring the cutting work.
(10) A hole portion of the protection ring is provided in the vicinity of the lip, and the oil attached to the protection ring is made to be dropped in the vicinity of the lip. A general protection ring shape has notches around the hole portion of the protection ring so as to make the oil easily drop down, however, can not collect the oil attached to the outer peripheral side of the protection ring to the hole portion. Accordingly, in order to collect more oil attached to the protection ring toward the vicinity of the lip, the protection ring surface is formed in the wavy shape. A grooving work may be applied to the protection ring toward the shaft center. The notches may be applied around the hole portion so as to make the oil easily drop.
(11) The manufacturing step is constituted only by the press work as the result of adding a bending work of the protection ring and abolishing a diagonally cutting work, and it is possible to achieve a reduction of the work steps.

### Embodiment

Next, a description will be given of embodiments in accordance with the present invention with reference to the accompanying drawings.

### First Embodiment

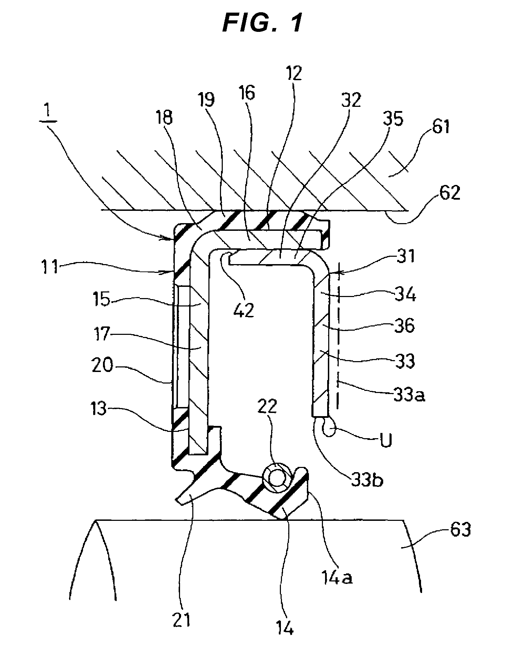

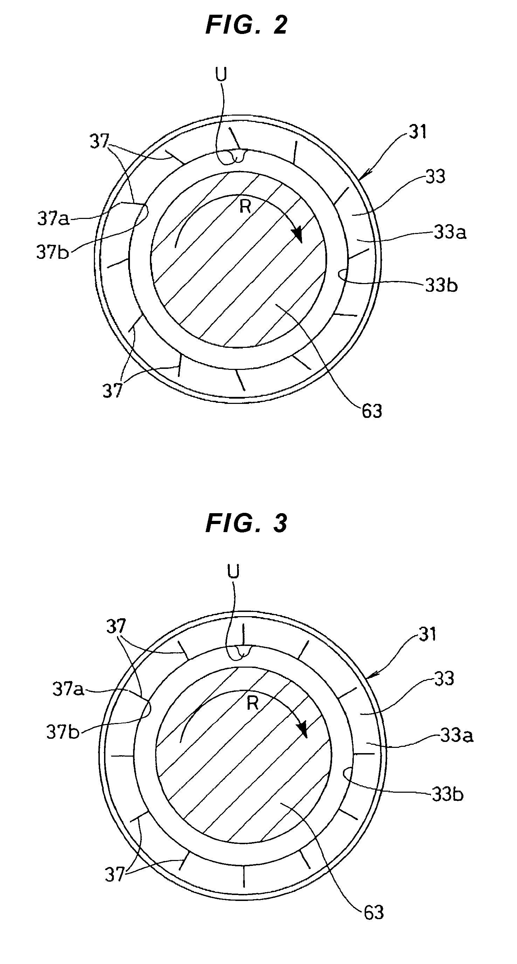

Fig. 1 shows a section of a substantial part of a sealing device (also called as an oil seal) 1 in accordance with a first embodiment of the present invention. Further, Fig. 2 is a side view of an oil supply member (also called as a protection ring) 31 corresponding to a constructing element of the sealing device 1 as seen from one side in an axial direction.

The sealing device 1 in accordance with the embodiment is structured such as to be installed to an inner periphery of a shaft hole 62 of a housing 61 and slidably come into close contact with a peripheral surface of a shaft 63 inserted to the shaft hole 62, and is constructed by a combination of a sealing device body 11 and an oil supply member 31.

The sealing device body 11 has a tubular fixation portion 12 which is fixed to the inner peripheral surface of the shaft hole 62 of the housing 61, a flange-like lip holding portion 13 is integrally provided from one endportion in an axial direction of the fixation portion 12 toward an inner side in a radial direction, and a seal lip 14 slidably coming into close contact with a peripheral surface of the shaft 63 is integrally provided from an inner peripheral end portion of the lip holding portion 13 toward the other side in the axial direction. Further, the sealing device body 11 is apart obtained by attaching (vulcanization bonding) a rubber-like elastic body 18 to an annular member 15 which is made of a rigid material such as a metal or the like and comprised of an inward flange portion 17 integrally formed on one end portion in an axial direction of a tubular portion 16, and the seal lip 14 is integrally formed together with an outer peripheral seal portion 19, an end face coating portion 20 and a dust lip 21 by this rubber-like elastic body 18. A garter spring 22 is installed to an outer periphery of the seal lip 14.

On the other hand, the oil supply member 31 has a tubular fitting portion 32 which is fitted to the inner peripheral side of the fixation portion 12, and a flange-like oil supply portion 33 is integrally provided from the other end portion in the axial direction of the fitting portion 32 toward the inner side in the radial direction. Further, the oil supply member 31 is constructed by a single part of an annular member 34 which is made of a rigid material such as a metal or the like and comprised of an inward flange portion 36 integrally formed on the other end portion in the axial direction of a tubular portion 35.

Further, the flange-like oil supply portion 33 in the oil supply member 31 is arranged at a sealed fluid side (an oil chamber side, a right side in the drawing) from an end 14a of the seal lip 14, and an oil transmission grooves 37 for guiding oil attached to the oil supply portion 33 along the grooves so as to drop on the shaft are provided on a surface (a sealed fluid side end face) 33a of the oil supply portion 33, as shown in Fig. 2. A plurality of grooves 37 are arranged at even intervals in a circumferential direction (twelve grooves are uniformly arranged in the drawing). The grooves 37 are formed as spiral curve shaped grooves which incline toward the same direction as a rotating direction R (a clockwise direction in the drawing) of the shaft 63 from an outer peripheral end portion 37a thereof to an inner peripheral end portion 37b. Further, the grooves 37 are structured such that the inner peripheral end portions 37b reach the inner peripheral edge portion 33b of the oil supply portion 33 (the groove-shaped spaces are open to an inner side in the radial direction).

The sealing device 1 having the structure mentioned above is installed between the housing 61 and the shaft 63 as shown in Fig. 1 so as to seal the mist state oil existing at an in-machine side, and has a feature in a point that the following operations and effects are achieved on the basis of the structure mentioned above.

In the sealing device 1 having the structure mentioned above, since the oil supply member 31 is assembled with the sealing device body 11 as mentioned above, and the oil supply member 31 is structured such as to make the oil to be attached thereto so as to drop onto the shaft, it is possible to lubricate the sliding portion of the seal lip 14 on the basis of the dropped oil.

Further, the sealing device body 11 integrally has the tubular fixation portion 12 fixed to the inner periphery of the shaft hole 62 of the housing 61, and the seal lip 14 slidably coming into close contact with the peripheral surface of the shaft 63, and the oil supply member 31 integrally has the tubular fitting portion 32 fitted to the inner peripheral side of the fixation portion 12, and the flange-like oil supply portion 33 provided from the fitting portion 32 toward the inner side in the radial direction. Accordingly, since both the elements 11 and 31 are manufactured respectively as the independent bodies and assembled with each other, it is possible to assemble the sealing device body 11 with the oil supply member 31 in a post-assembly manner as occasion demands.

Further, the oil supply member 31 has the flange-like oil supply portion 33, and the flange-like oil supply portion 33 is structured such as to make the mist state oil to be attached to the axial end face 33a and collect it so as to drop as oil drops U onto the shaft. Accordingly, since the oil supply portion 33 is formed in the flange shape so as to have the comparatively wide axial end face 33a, it is possible to make a lot of oil to be attached thereto so as to drop down.

Further, if the flange-like oil supply portion 33 is arranged above the seal lip 14, the oil is dropped onto the seal lip and is not dropped onto the shaft, and there is a risk that the oil is not supplied to the sliding portion of the seal lip 14. However, in the present embodiment, since the oil supply portion 33 is arranged at the sealed fluid side from the end 14a of the seal lip 14, it is possible to securely drop the oil onto the shaft.

Further, in the case that the shaft 63 is rotated at a high speed, the atmospheric air flow is generated around the oil supply member 31 in accordance with the high speed rotation of the shaft 63. Accordingly, there is a risk that the oil attached to the oil supply portion 33 flows away in the circumferential direction on the surface 33a of the oil supply portion 33 along the atmospheric air flow and is not dropped onto the shaft. However, in the present embodiment, since the oil transmission grooves 37 for guiding the oil attached to the oil supply portion 33 along the grooves so as to drop on the shaft are provided in the surface 33a of the oil supply portion 33, the oil flows along the grooves 37, and thus readily be drops on the shaft. The oil flows along the grooves 37 so as to be collected, and drops as the oil drops U on the shaft from the inner peripheral edge portion 33b of the oil supply portion 33. Further, since the oil transmission grooves 37 are formed as the spiral curve shaped grooves, the oil is guided by the groove 37, while flowing together with the atmospheric air flow, so as to head for the inner peripheral edge portion of the oil supply portion 33 little by little. Accordingly, it is possible to efficiently collect the oil.

Accordingly, in cooperation of the effects mentioned above, it is possible to provide the sealing device 1 which can achieve an excellent lubricating oil supply capacity.

In this case, in Fig. 2 mentioned above, a plurality of oil transmission grooves 37 are arranged at even intervals all over a whole periphery of the flange-like oil supply portion 33 formed in the annular shape (twelve grooves are uniformly arranged in the drawing). However, since only the grooves 37 arranged above the shaft 63 can drop the oil on the shaft, it is enough that the grooves 37 are provided at least at a position above the shaft 63 on the circumference of the oil supplyportion 33. In this case, an attaching direction (a direction in the circumferential direction) of the oil supply portion 33 is limited by limiting the position where the grooves 37 are provided as mentioned above. Therefore it is preferable to arrange a plurality of grooves 37 at even intervals all over the whole periphery of the oil supply portion 33, in the case of attaching importance to easiness of an installation work.

### Second Embodiment

Further, as mentioned above, the oil transmission grooves 37 may be constructed by grooves (radial grooves)extending in the radial direction, as shown in Fig. 3.

### Third Embodiment

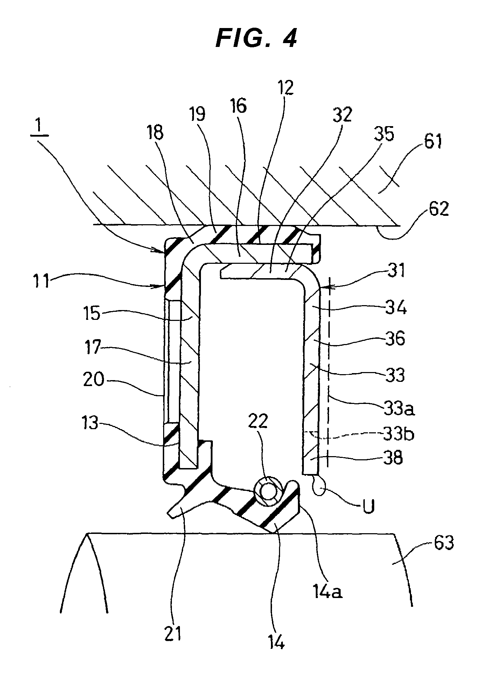

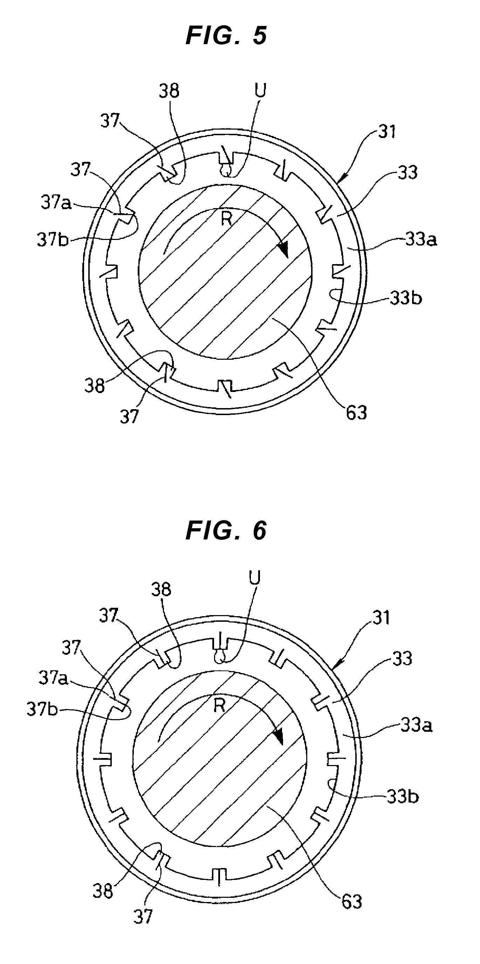

Fig. 4 shows a section of a substantial part of a sealing device (also called as an oil seal) 1 in accordance with a third embodiment of the present invention. Further, Fig. 5 shows a side view of an oil supply member (also called as a protection ring) 31 corresponding to a constructing element of the sealing device 1 as seen from one side in an axial direction.

The sealing device 1 in accordance with the embodiment is structured such as to be installed to an inner periphery of a shaft hole 62 of a housing 61 so as to slidably comes into close contact with a peripheral surface of a shaft 63 inserted to the shaft hole 62, and is constructed by a combination of a sealing device body 11 and the oil supply member 31.

The sealing device body 11 has a tubular fixation portion 12 which is fixed to an inner peripheral surface of the shaft hole 62 of the housing 61, a flange-like lip holding portion 13 is integrally provided from one endportion in an axial direction of the fixation portion 12 toward an inner side in a radial direction, and a seal lip 14 slidably coming into close contact with a peripheral surface of the shaft 63 is integrally provided from an inner peripheral end portion of the lip holding portion 13 toward the other side in the axial direction. Further, the sealing device body 11 is apart obtained by attaching (vulcanization bonding) a rubber-like elastic body 18 to an annular member 15 which is made of a rigid material such as a metal or the like and comprised of an inward flange portion 17 integrally formed on one end portion in an axial direction of a tubular portion 16, and the seal lip 14 is integrally formed together with an outer peripheral seal portion 19, an end face coating portion 20 and a dust lip 21 by this rubber-like elastic body 18. A garter spring 22 is installed to an outer periphery of the seal lip 14.

On the other hand, the oil supply member 31 has a tubular fitting portion 32 which is fitted to the inner peripheral side of the fixation portion 12, and a flange-like oil supply portion 33 is integrally provided from the other end portion in the axial direction of the fitting portion 32 toward the inner side in the radial direction. Further, the oil supply member 31 is constructed by a single part of an annular member 34 which is made of a rigid material such as a metal or the like and comprised of an inward flange portion 36 integrally formed on the other end portion in the axial direction of a tubular portion 35.

Further, the flange-like oil supply portion 33 in the oil supply member 31 is arranged at a sealed fluid side (an oil chamber side, a right side in the drawing) from an end 14a of the seal lip 14, protrusions 38 are provided in an inner peripheral edge portion 33b of the oil supply portion 33 toward an inner side in a radial direction, and oil transmission grooves 37 for guiding oil attached to the oil supply portion 33 along the grooves so as to drop on the shaft are provided on a surface (a sealed fluid side end faces) 33a of the oil supply portion 33 and surfaces (sealed fluid side end face) of the protrusions 38 toward end portions in a protruding direction of the protrusions 38, as shown in Fig. 5. A plurality of the protrusions 38 and the grooves 37 are respectively arranged at even intervals in a circumferential direction (twelve of each are uniformly arranged in the drawing). The grooves 37 are formed as a spiral curve shaped groove which incline toward the same direction as a rotating direction R (a clockwise direction in the drawing) of the shaft 63 from an outer peripheral end portion 37a thereof to an inner peripheral end portion 37b. Further, the grooves 37 are structured such that the inner peripheral end portions 37b thereof reach ends of the protrusions 38 (the groove-shaped spaces are open to an inner side in the radial direction).

The sealing device 1 having the structure mentioned above is installed between the housing 61 and the shaft 63 as shown in Fig. 4 so as to seal the mist state oil existing at the in-machine side, and has a feature in a point that the same operations and effects as those of the first embodiment mentioned above are achieved, and the following operations and effects are achieved in addition.

In the case that the shaft 63 is rotated at a high speed, the atmospheric air flow is generated around the oil supply member 31 in accordance with the high speed rotation of the shaft 63. Accordingly, there is a risk that the oil attached to the oil supply portion 33 flows away in the circumferential direction on the surface 33a of the oil supply portion 33 along the atmospheric air flow and is not dropped onto the shaft. However, in the present embodiment, since the protrusions 38 are provided on the inner peripheral edge portion 33b of the oil supply portion 33 toward the inner side in the radial direction, and the oil transmission grooves 37 for guiding the oil attached to the oil supply portion 33 along the groove so as to drop on the shaft are provided in the surface 33a of the oil supply portion 33 and the surfaces of the protrusions 38 toward the end portion of the protrusion 38, the oil flows along the grooves 37, and thus readily drops on the shaft. The oil flows along the grooves 37 so as to be collected, and drops as the oil drops U on the shaft from the end portions of the protrusions 38.

Accordingly, in cooperation of the respective effects mentioned above, it is possible to provide the sealing device 1 having an excellent lubricating oil supply capacity.

In this case, in Fig. 5 mentioned above, a plurality of protrusions 38 and oil transmission grooves 37 are arranged at even intervals all over a whole periphery of the flange-like oil supply portion 33 formed in the annular shape (twelve of each are uniformly arranged in the drawing). However, since only the protrusions 38 and the grooves 37 arranged above the shaft 63 can drop the oil on the shaft, it is enough that the protrusions 38 and grooves 37 are provided at least at a position above the shaft 63 on the circumference of the oil supply portion 33. In this case, an attaching direction (a direction in the circumferential direction) of the oil supply portion 33 is limited by limiting the position where the protrusions 38 and the grooves 37 are provided as mentioned above. Therefore, it is preferable to arrange a plurality of protrusions 38 and grooves 37 at even intervals all over the whole periphery of the oil supply portion 33, in the case of attaching importance to an easiness of an installing work.

### Fourth Embodiment

Further, as mentioned above, the oil transmission grooves 37 may be constructed by grooves extending in the radial direction (radial grooves), as shown in Fig. 6.

Further, the shape of the protrusions 38 is a quadrangular shape as shown in Fig. 5 or 6, however, is not particularly limited to this, but may be a round shape (a semicircular shape) or a triangular shape.

### Fifth Embodiment

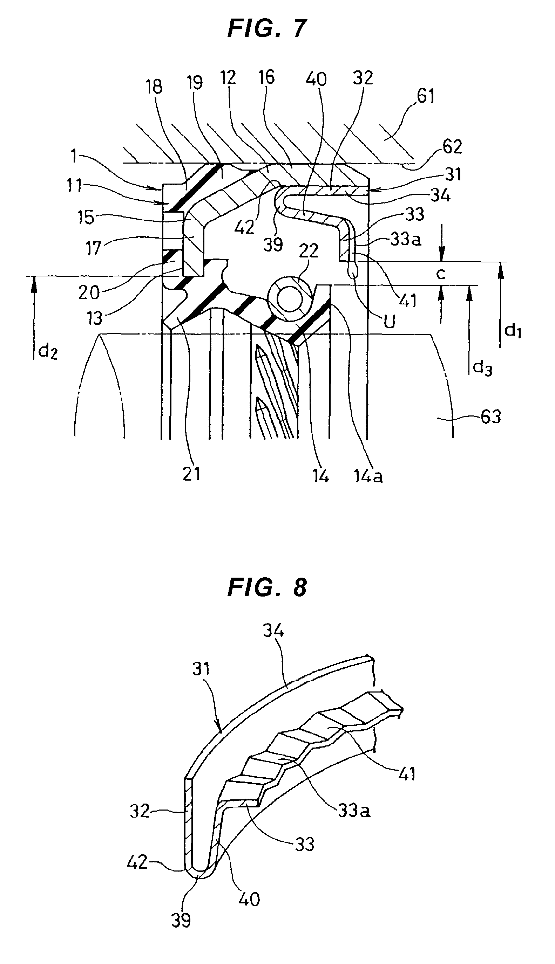

Fig. 7 shows a section of a substantial part of a sealing device (also called as an oil seal) 1 in accordance with a fifth embodiment of the present invention. Further, Fig. 8 shows apartlyperspective view of an oil supply member (also called as a protection ring) 31 corresponding to a constructing element of the sealing device 1.

The sealing device 1 in accordance with the embodiment is structured such as to be installed to an inner periphery of a shaft hole 62 of a housing 61 so as to slidably comes into close contact with a peripheral surface of a shaft 63 inserted to the shaft hole 62, and is constructed by a combination of a sealing device body 11 and the oil supply member 31.

The sealing device body 11 has a tubular fixation portion 12 which is fixed to an inner peripheral surface of the shaft hole 62 of the housing 61, a flange-like lip holding portion 13 is integrally provided from one endportion in an axial direction of the fixation portion 12 toward an inner side in a radial direction, and a seal lip 14 slidably coming into close contact with a peripheral surface of the shaft 63 is integrally provided from an inner peripheral end portion of the lip holding portion 13 toward the other side in the axial direction. Further, the sealing device body 11 is apart obtained by attaching (vulcanization bonding) a rubber-like elastic body 18 to an annular member (a lip holder) 15 which is made of a rigid material such as a metal or the like and comprised of an inward flange portion 17 integrally formed on one end portion in an axial direction of a tubular portion 16, and the seal lip 14 is integrally formed together with an outer peripheral seal portion 19, an end face coating portion 20 and a dust lip 21 by this rubber-like elastic body 18. A garter spring 22 is installed to an outer periphery of the seal lip 14.

On the other hand, the oil supply member 31 is formed as an annular body integrally having a tubular fitting portion 32 which is fitted to the inner peripheral side of the fixation portion 12, a reverse portion 39 having a circular arc shaped cross section and integrally formed from one end portion in an axial direction of the fitting portion 32 toward an inner side in a radial direction, an inner peripheral tube portion 40 integrally formed with the reverse portion 39, and a flange-like oil supply portion 33 integrally formed from the other end portion in the axial direction of the inner peripheral tube portion 40 toward the inner side in the radial direction. The tubular fitting portion 32 and the inner peripheral tube portion 40 are concentrically arranged, and a predetermined radial gap is set between both the elements 32 and 40. Further, the oil supply member 31 is constructed by a single part of an annular member 34 which is made of a rigid material such as a metal or the like and integrally has the tubular fitting portion 32, the reverse portion 39 having the circular arc shaped cross section, the inner peripheral tube portion 40 and the flange-like oil supply portion 33. The oil supply member 31 or the annular member 34 is formed only by a press work which does not accompany a cutting work. Further, the oil supply member 31 or the annular member 34 have a spring characteristic in the radial direction using the reverse portion 39 having the circular arc shaped cross section as a spring portion on the basis of its cross sectional shape.

Further, the flange-like oil supply portion 33 in the oil supply member 31 is arranged at a sealed fluid side (an oil chamber side, a right side in the drawing)from an end 14a of the seal lip 14, and the oil supply portion 33 is provided as a wavy shape 41 all over a whole thickness including a surface (a sealed fluid side end face) 33a thereof, for guiding oil attached to the oil supply portion 33 along grooves so as to drop on the shaft, as shown in Fig. 8. In the wavy shape 41, wave pitches are arranged along a circumferential direction, in other words, peaks and troughs of the wavy shape are alternately arranged in a circumferential direction, and a ridge line of each of the peaks and a bottom line of each of the troughs are radially arranged along a radial direction. Each of the troughs functions as the groove.

The sealing device 1 having the structure mentioned above is installed between the housing 61 and the shaft 63 as shown in Fig. 7 so as to seal the mist state oil existing at the in-machine side, and has a feature in a point that the same operations and effects as those of the first embodiment mentioned above are achieved, and the following operations and effects are achieved in addition.

Since the flange-like oil supply portion 33 is provided as the wavy shape 41 all over the whole thickness including the surface 33a for guiding the oil attached to the oil supply portion 33 along the grooves so as to drop on the shaft as mentioned above, the oil attached surface is made three dimensional, and the oil attached area is enlarged in comparison with the first embodiment mentioned above. Further, since the oil supply member 31 integrally has the tubular fitting portion 32, the reverse portion 39 having the circular arc shaped cross section, the inner peripheral tube portion 40 and the flange-like oil supply portion 33, and the oil is attached to the inner peripheral surface of the fitting portion 32, the inner surface of the reverse portion 39 and the outer peripheral surface of the inner peripheral tube portion 40 in addition to the surface 33a of the oil supply portion 33, the oil attached area is further enlarged. Accordingly, it is possible to collect a lot of oil and it is possible to supply the oil to the lip slide portion. In this case, it is possible to apply the method for further enlarging the oil attached area by integrally providing the tubular fitting portion 32, the reverse portion 39 having the circular arc shaped cross section, the inner peripheral tube portion 40 and the flange-like oil supply portion 33 in the oil supply member 31 as mentioned above, to the sealing devices 1 in accordance with the first to fourth embodiments mentioned above in addition to the fifth embodiment.

Further, while the oil supply member 31 integrally having the tubular fitting portion 32, the reverse portion 39 having the circular arc shaped cross section, the inner peripheral tube portion 40 and the flange-like oil supply portion 33 mentioned above is fitted to the inner peripheral side of the fixation portion 12 from the reverse portion 39 at a time of fitting it to the sealing device body 11, the reverse portion 39 is formed to have the circular arc shaped cross section and has a chamfer portion 42 for facilitating the fitting on its outer surface, and the chamfer portion 42 is set only by a press work without any cutting work of the oil supply member 31. Accordingly, it is possible to form the oil supply member 31 having the chamfer portion 42 for facilitating the fitting to the sealing device body 11 only by a press work which does not require any cutting work, whereby it is easy to manufacture it. In this case, as a comparative example relating to the matter mentioned above, the oil supply member 31 in accordance with the first embodiment can be given, where it is necessary to form the chamfer portion 42 on the outer periphery of the end of the tubular fitting portion 32 in the oil supply member 31 in accordance with a cutting work as shown in Fig. 1, and the work step corresponding thereto can be omitted in the fifth embodiment. The matter relating to the chamfer can be also applied to the sealing devices 1 in accordance with the first to fourth embodiments in addition to the fifth embodiment mentioned above.

Further, in the fifth embodiment, an inner diameter (an inner peripheral diameter) d₁ of the oil supply member 31 is set comparatively large, that is, specifically, is set larger than an inner diameter d₂ of the annular member (the lip holder) 15 in the sealing device body 11, and is set larger than an outer diameter d₃ of a seal lip end 14a. This is because of the following reasons.

If the inner diameter d₁ of the oil supply member 31 is set smaller than that mentioned above, an amount of the oil which is directly supplied to the lip 14 is reduced, and there is caused a problem that a seal service life is lowered by thermal deterioration, slide abrasion or the like due to a poor lubrication. Further, since the oil coming round to the inner side of the oil supply member 31 is easily held by making the inner diameter d₁ of the oil supply member 31 closer to the outer diameter of the shaft 63, however, the held oil is contrarily hard to be discharged, the deteriorated oil is reserved, and this is not preferable in the light of the seal service life. It is preferable to set a difference c between the inner diameter d₁ of the oil supply member 31 and the outer diameter d₃ of the seal lip end 14a larger than about 1 to 2 mm in an exact size. The matter relating to the dimension mentioned above can be also applied to the sealing devices 1 in accordance with the first to fourth embodiments in addition to the fifth embodiment.

## Claims

1. A sealing device installed to an inner periphery of a shaft hole of a housing so as to slidably come into close contact with a peripheral surface of a shaft inserted to said shaft hole, the sealing device comprising:
a sealing device body integrally having a tubular fixation portion fixed to the inner periphery of the shaft hole of said housing and a seal lip slidably coming into close contact with the peripheral surface of said shaft; and
an oil supply member integrally having a tubular fitting portion fitted to an inner peripheral side of said fixation portion and a flange-like oil supply portion provided from said fitting portion toward an inner side in a radial direction,
wherein said oil supply portion is arranged at a sealed fluid side from an end of said seal lip, and oil transmission grooves are provided at least at a position above the shaft in a surface of said oil supply portion, the oil transmission grooves being provided for guiding oil attached to said oil supply portion along the grooves so as to drop on the shaft.

2. The sealing device as claimed in claim 1, wherein protrusions are provided on an inner peripheral edge portion of the oil supply portion toward an inner side in the radial direction, and the oil transmission grooves are provided toward end portions in a protruding direction of said protrusions.

3. The sealing device as claimed in claim 1 or 2,
wherein the oil transmission grooves are formed as spiral curve shaped grooves which incline toward the same direction as a rotating direction of the shaft from their outer peripheral end portions to their inner peripheral end portions.

4. A sealing device installed to an inner periphery of a shaft hole of a housing so as to slidably come into close contact with a peripheral surface of a shaft inserted to said shaft hole, the sealing device comprising:
a sealing device body integrally having a tubular fixation portion fixed to the inner periphery of the shaft hole of said housing and a seal lip slidably coming into close contact with the peripheral surface of said shaft; and
an oil supply member integrally having a tubular fitting portion fitted to an inner peripheral side of said fixation portion and a flange-like oil supply portion provided from said fitting portion toward an inner side in a radial direction,
wherein said oil supply portion is arranged at a sealed fluid side from an end of said seal lip, and a wavy shape is provided at least at a position above the shaft in a surface of said oil supply portion, the wavy shape being provided for guiding oil attached to said oil supply portion along grooves so as to drop on the shaft.

5. The sealing device as claimed in any one of claims 1 to 4, wherein the oil supply member integrally has a tubular fitting portion, a reverse portion having a circular arc shaped cross section and integrally formed from one end portion in an axial direction of said fitting portion toward an inner side in the radial direction, an inner peripheral tube portion integrally formed with said reverse portion, and a flange-like oil supply portion integrally formed from the other end portion in the axial direction of said inner peripheral tube portion toward an inner side in the radial direction.
